(19) Europäisches Patentamt
European Patent Office
Office européen des brevets

(11) Veröffentlichungsnummer: **0 048 997**
**B1**

(12) **EUROPÄISCHE PATENTSCHRIFT**

(45) Veröffentlichungstag der Patentschrift: **27.03.85**

(21) Anmeldenummer: **81107781.7**

(22) Anmeldetag: **30.09.81**

(51) Int. Cl.⁴: **A 01 N 43/84**, A 01 N 43/64, A 01 N 43/50 // (A01N43/84, 43:64, 43:50),(A01N43/64, 43:40),(A01N43/50, 43:40)

(54) **Fungizide Mittel, enthaltend heterocyclische Verbindungen und die Herstellung und Verwendung solcher Mittel.**

(30) Priorität: **30.09.80 CH 7311/80**
**14.07.81 CH 4611/81**

(43) Veröffentlichungstag der Anmeldung: **07.04.82 Patentblatt 82/14**

(45) Bekanntmachung des Hinweises auf die Patenterteilung: **27.03.85 Patentblatt 85/13**

(84) Benannte Vertragsstaaten: **AT BE CH DE FR GB IT LI NL SE**

(56) Entgegenhaltungen:
**FR - A - 2 359 578**
**FR - A - 2 365 956**

(73) Patentinhaber: **F. HOFFMANN-LA ROCHE & CO. Aktiengesellschaft, CH-4002 Basel (CH)**

(72) Erfinder: **Bohnen, Klaus, Dr., Buchserstrasse 48, CH-8157 Dielsdorf (CH)**

(74) Vertreter: **Lederer, Franz, Dr. et al, Patentanwälte Dr. Lederer Franz Meyer-Roxlau Reiner F. Lucile-Grahn-Strasse 22, D-8000 München 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 048 997 B1

BUNDESDRUCKEREI BERLIN

**Beschreibung**

Zur Bekämpfung von ertrags- und qualitätsmindernden Getreidekrankheiten werden in der Landwirtschaft vermehrt Fungizide eingesetzt. So finden beispielsweise zur Kontrolle schädigender Getreideblattkrankheiten, die durch Erysiphe-, Puccinia-, Rhynchosporium- und Helminthosporium-Arten von Fungi verursacht werden, die unter dem Namen »Diclobutrazol« bekannte Verbindung 1-tert.Butyl-2-(1,2,4-triazol-1-yl)-2-(o,p-dichlorbenzyl)-äthanol sowie damit nahverwandte Verbindungen Verwendung. Diese Verbindungen besitzen jedoch den Nachteil, daß sie in wirksamer Dosierung bei gewissen Getreidearten eine unerwünschte wachstumsregulatorische Wirkung entfalten können. Dies geschieht insbesondere bei früher Applikation solcher Verbindungen und äußert sich in Hemmung des Pflanzenwachstums als Folge von Internodienverkürzungen.

Es wurde nun gefunden, daß dieser Nachteil durch gleichzeitige Applikation einer oder mehrerer der oben erwähnten Verbindungen und eines oder mehrerer Phenylalkylmorpholin- oder -piperidin-Derivate der unterstehenden Formel I, die ebenfalls fungizide Eigenschaften aufweisen, vermindert oder gar eliminiert werden kann. Ferner wurde gefunden, daß im Falle der Kombination der genannten Komponenten der Unterschied zwischen der wirksamen Dosierung und der toxischen Dosierung größer und damit für die Praxis sicherer ist als dies bei alleiniger Verwendung der Phenylalkylmorpholin- bzw. -piperidin-Derivate I der Fall ist.

Aufgabe der vorliegenden Erfindung ist es, die unerwünschte wachstumsregulatorische Wirkung von »Diclobutrazol« oder damit nahverwandter Verbindungen zu vermindern bzw. auszuschalten sowie den chemotherapeutischen Index zu verbessern, d. h. den obenerwähnten Unterschied bei Verwendung von Phenylalkylmorpholin- oder -piperidin-Derivaten zu vergrößern.

Die vorliegende Erfindung betrifft demgemäß ein fungizides Mittel, das dadurch gekennzeichnet ist, daß es mindestens eine Verbindung der Formel

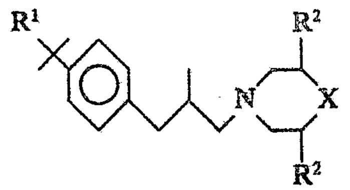

(I)

worin $R^1$ $C_1-C_4$-Alkyl oder Phenyl, und entweder X Sauerstoff und $R^2$ Methyl, oder X Methylen und $R^2$ Wasserstoff oder Methyl bedeuten,
und mindestens eine Verbindung der Formel

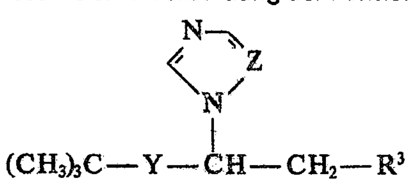

(II)

worin Y eine Gruppe der Formel (a) oder (b)

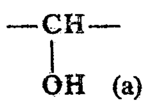

(a)

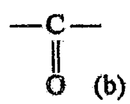

(b)

Z CH oder N, und $R^3$ p-Chlorphenyl oder o,p-Dichlorphenyl bedeuten,
wobei die Verbindung(en) der Formel I und die Verbindung(en) der Formel II im Gewichtsverhältnis von 2—10 : 1 vorliegen, und, falls erforderlich, Formulierungshilfsstoffe enthält.

Die vorliegende Erfindung betrifft ferner ein Verfahren zur Herstellung des fungiziden Mittels sowie dessen Verwendung zur Bekämpfung von Pflanzenfungi.

Bei Verwendung des erfindungsgemäßen Mittels wurde weiterhin gefunden, daß eine unerwartete Senkung der zu applizierenden Menge der Wirkstoffkombination ermöglicht wird. Daraus kann geschlossen werden, daß die einzelnen Wirkstoffe der Kombination sich in ihrer Wirkungsentfaltung gegenseitig und vorteilhaft unterstützen, d. h. ein Synergismus eintritt.

Es ergeben sich bei Verwendung des erfindungsgemäßen fungiziden Mittels für die Landwirtschaft u. a. die folgenden Vorteile:

- Reduktion des Wirkstoffaufwandes zur wirksamen Bekämpfung von Pilzkrankheiten.
- Geringere Belastung von Erntegut, Boden und Wasser durch Ausbringung geringerer Wirkstoffmenge pro Hektar und Behandlung.
- Eliminierung des nachteiligen wachstumsregulatorischen Effektes, der bei alleiniger Anwendung der Verbindungen der Formel II des pflanzliche Wachstum durch Internodienverkürzung beeinflussen kann.

- Wesentliche Verbesserung der Pflanzenverträglichkeit gegenüber der bei alleiniger Anwendung der Kombinationspartner gegeben.
- Bei Bekämpfung von Getreidekrankheiten, Verbesserung des chemotherapeutischen Indexes.

Bevorzugte Verbindungen der Formel I für die erfindungsgemäßen fungiziden Mittel sind diejenigen, worin X Sauerstoff und $R^2$ Methyl bedeuten, sowie diejenigen, worin $R^1$ Methyl, Äthyl oder Phenyl bedeutet. Besonders bevorzugt sind 4-[3-(p-tert.Butyl-phenyl)-2-methyl-propyl]-2,6-dimethylmorpholin und 1-[3-(p-tert.Butyl-phenyl)-2-methylpropyl]-piperidin, insbesondere das cis-Isomere der ersterwähnten Verbindung.

Eine besonders bevorzugte Verbindung der Formel II ist 1-tert.Butyl-2-(1,2,4-triazol-1-yl)-2-(o,p-dichlorbenzyl)äthanol.

Die Verbindungen der Formel I und II sind bekannt und können z. B. nach den in der deutschen Offenlegungsschrift Nr. 2 752 135 (Verbindungen der Formel I) bzw. in der belgischen Patentschrift Nr. 8 57 836 und deutschen Offenlegungsschrift Nr. 2 638 470 (Verbindungen der Formel II) beschriebenen Verfahren hergestellt werden. Zudem sind diejenigen Verbindungen der Formel II, in der Z N bedeutet, aus der Französischen Patentpublikation Nr. 2 365 956 bekanntgeworden, und zwar als Fungizide in Kombination mit Gibberellinsäure oder anderen Gibberellinderivaten. Auch die Französische Patentpublikation Nr. 2 359 578 offenbart Kombinationen von Fungiziden: In diesem Fall ist jedoch der eine Wirkstoff N-Tridecyl-2,6-dimethylmorpholin und der andere 1-(4-Chlorphenoxy)-3,3-dimethyl-1-(1,2,4-triazol-1-yl)-2-butanon.

Die erfindungsgemäßen Mittel sind wirksam gegen die verschiedenartigsten Fungi an Pflanzen und können dementsprechend zur Bekämpfung von Fungi in der Landwirtschaft und im Gartenbau Verwendung finden. Die Mittel eignen sich insbesondere zur präventiven und kurativen Behandlung von echten Mehltaupilzen, wie beispielsweise Erysiphe graminis auf Getreidearten und Erregern von Rostkrankheiten wie beispielsweise solchen der Gattungen Puccinia, Uromyces, Phragmidium und Hemileia.

Ferner zeigen die Mittel auch eine ausgeprägte fungizide Wirkung gegen phytopathogene Pilzarten wie z. B. folgender Gattungen: Ustilago, Cercospora, Rhynchosporium, Tilletia, Helminthosporium, Coniophora, Lenzites, Thielaviopsis, Fusarium, Pyricularia und Penicillium.

Die erfindungsgemäßen Mittel können neben den Verbindungen der Formeln I und II Formulierungshilfsstoffe enthalten, zweckmäßigerweise:

Feste Trägerstoffe, Lösungs- und Dispersionsmittel, Tenside (Netz- und Emulgiermittel), Dispergatoren (ohne Tensidwirkung) und/oder Stabilisatoren.

Unter Verwendung solcher und anderer Hilfsstoffe können die Verbindungen der Formeln I und II, also die fungiziden Wirkstoffe, in die üblichen Formulierungen übergeführt werden, wie Stäube, Pulver, Granulate, Lösungen, Emulsionen, Suspensionen, emulgierbare Konzentrate, Pasten und dergleichen.

Die Verbindungen der Formeln I und II sind im allgemeinen wasserunlöslich und können nach den für wasserunlösliche Verbindungen üblichen Methoden, eventuell unter Verwendung der diesbezüglichen Formulierungshilfsstoffe, konfektioniert werden. Das erfindungsgemäße Verfahren zur Herstellung des fungiziden Mittels besteht darin, daß man mindestens eine Verbindung der Formel I mit mindestens einer Verbindung der Formel II und, falls erforderlich, mit Fomulierungshilfsstoffen, vermischt.

Als feste Trägerstoffe kommen im wesentlichen in Frage: mineralische Stoffe, wie z. B. Kreide, Dolomit, Kalkstein und Kieselsäure und deren Salze (beispielsweise Kieselgur, Kaolin, Bentonit, Talkum usw.); organische Stoffe, wie z. B. Cellulose, Stärke, Harnstoff und Kunstharze; und Düngemittel, wie z. B. Phosphate und Nitrate, wobei solche Trägerstoffe als Pulver oder als Granulate vorliegen können.

Als Lösungs- bzw. Dispersionsmittel kommen im wesentlichen in Frage: Alkohole, Ketone, Ester, aliphatische und aromatische Kohlenwasserstoffe und chlorierte aliphatische und aromatische Kohlenwasserstoffe, wobei solche Lösungs- bzw. Dispersionsmittel vorzugsweise Flammpunkte von mindestens 30° C und Siedepunkte von mindestens 50° C aufweisen, und Wasser.

Die Tenside (Netz- und Emulgiermittel) können nichtionische Verbindungen sein, wie Kondensationsprodukte von Fettsäuren, Fettalkoholen oder fettsubstituierten Phenolen mit Äthylenoxid; Fettsäureester und -äther von Zuckern oder mehrwertigen Alkoholen; die Produkte, die aus Zuckern oder mehrwertigen Alkoholen durch Kondensation mit Äthylenoxid erhalten werden; Blockpolymere von Äthylenoxid und Propylenoxid; oder Alkyldimethylaminoxide.

Die Tenside können auch anionische Verbindungen darstellen, wie Seifen; Fettsulfatester, z. B. Dodecylnatriumsulfat, Octadecylnatriumsulfat und Cetylnatriumsulfat; fettaromatische Sulfonate, z. B. Alkylbenzolsulfonate, wie Calcium-Dodecylbenzolsulfonat, und Butylnaphthalinsulfonate; und komplexere Fettsulfonate, z. B. die Amidkondensationsprodukte von Ölsäure und N-Methyltaurin und das Natriumsulfonat von Dioctylsuccinat.

Die Tenside können schließlich kationische Verbindungen sein, wie Alkyldimethylbenzylammoniumchloride, Dialkyldimethylammoniumchloride, Alkyltrimethylammoniumchloride und äthoxylierte quaternäre Ammoniumchloride.

Als Dispergatoren (ohne Tensidwirkung) kommen im wesentlichen in Frage: Natrium- und Ammoniumsalze von Ligninsulfonsäure, Natriumsalze von Maleinsäureanhydrid-Diisobutylen-Copolymeren und Natrium- und Ammoniumsalze von Polykondensationsprodukten aus Napthalin und Formaldehyd.

Als Dispergatoren, die sich insbesondere als Verdickungs- bzw. Antiabsetzmittel eignen, können z. B. Methylcellulose, Carboxymethylcellulose, Hydroxycellulose, Polyvinylalkohol, Alginate, Caseinate und Blutalbumin eingesetzt werden.

Beispiele von geeigneten Stabilisatoren sind säurebindende Mittel (beispielsweise Epichlorhydrin, Phenylglycidäther, Soyaepoxide usw.), Antioxidantien (beispielsweise Ester der Gallussäure, Butylhydroxytoluol usw.), UV-Absorber (beispielsweise substituierte Benzophenone, Diphenylacrylonitrilsäureester, Zimtsäureester usw.) und Deaktivatoren (beispielsweise Salze der Äthylendiaminotetraessigsäure, Polyglykole usw.).

Zweckmäßigerweise sind in den erfindungsgemäßen fungiziden Mitteln die festen Trägerstoffe im Konzentrationsbereich zwischen 1 und 99,9%, die Lösungs- bzw. Dispersionsmittel im Konzentrationsbereich zwischen 1 und 99,9%, die Tenside im Konzentrationsbereich zwischen 1 und 20%, die Dispergatoren im Konzentrationsbereich zwischen 1 und 20%, die Dispergatoren als Verdickungs- bzw. Antiabsetzmittel im Konzentrationsbereich zwischen 0,1 und 5% und die Stabilisatoren im Konzentrationsbereich zwischen ,1 und 5% vorhanden, wobei diese Prozente sich auf das Gesamtgewicht des Mittels beziehen.

Die Herstellung der Mittel kann in bekannter Weise durchgeführt werden, z. B. durch Vermischen der jeweiligen Wirkstoffe mit festen Trägerstoffen, durch Auflösen oder Suspendieren in geeigneten Lösungs- bzw. Dispersionsmitteln, eventuell unter Verwendung von Tensiden als Netz- oder Emulgiermitteln, durch Verdünnen bereits vorbereiteter emulgierbarer Konzentrate mit Lösungs- bzw. Dispersionsmitteln, usw.

Zur Herstellung von pulverförmigen Präparaten können die aktiven Komponenten, d. h. die Verbindungen der Formeln I und II, mit festen Trägerstoffen vermischt werden, z. B. durch Zusammenmahlen; oder man imprägniert den festen Trägerstoff mit einer Lösung bzw. Dispersion der aktiven Komponenten und entfernt dann das Lösungs- bzw. Dispersionsmittel durch Verdunsten, Erhitzen oder durch Absaugen unter vermindertem Druck. Durch Zusatz von Tensiden bzw. Dispergatoren kann man solche pulverförmige Präparate mit Wasser leicht benetzbar machen, so daß sie in Form von wäßrigen Suspensionen, z. B. als Spritzmittel, anwendbar sind.

Die Verbindungen der Formeln I und II können auch mit einem Tensid und einem festen Trägerstoff zur Bildung eines netzbaren Pulvers vermischt werden, welches in Wasser dispergierbar ist, oder sie können mit einem festen vorgranulierten Trägerstoff zur Bildung eines granulatförmigen Produktes vermischt werden.

Wenn gewünscht, können die Verbindungen der Formeln I und II in einem mit Wasser nicht mischbaren Lösungsmittel, wie beispielsweise einem alicyclischen Keton, gelöst werden, das zweckmäßigerweise gelöste Emulgiermittel enthält, so daß die Lösung bei Zugabe zu Wasser selbstemulgierend wirkt. Andernfalls können die Aktivsubstanzen mit einem Emulgiermittel vermischt und das Gemisch dann mit Wasser auf die gewünschte Konzentration verdünnt werden. Auf diese Weise enthält man emulgierbare Konzentrate bzw. gebrauchsfertige Emulsionen. Derartige emulgierbare Konzentrate können zwischen 5 und 95 Gewichtsprozent, insbesondere zwischen 25 und 75 Gewichtsprozent Wirkstoff (Verbindungen der Formeln I und II) enthalten.

Das fungizide Mittel kann auch in Form einer Druckgaspackung vorliegen, wobei zweckmäßigerweise zusätzlich zum Treibmittel, welches geeigneterweise ein verflüssigtes polyhalogeniertes Alkan, wie Dichlordifluormethan, ist, ein Lösungsmittel verwendet wird.

Die erfindungsgemäßen fungiziden Mittel können neben den Wirkstoffen der Formeln I und II auch andere Wirkstoffe enthalten, z. B. anderweitige fungizide Mittel, insektizide und akarizide Mittel, Bakterizide, Herbizide, Pflanzenwachstumsregulierende Mittel und Düngemittel. Solche Kombinationsmittel eignen sich zur Verbreitung des Wirkungsspektrum oder zur spezifischen Beeinflussung des Pflanzenwachstums. Beispiele solcher bekannter Wirkstoffe sind

O,O-Dimethyl-S-(1,2-dicarbäthoxyäthyl)-dithiophosphat,
O,O-Diäthyl-O-(p-nitrophenyl)-thiophosphat, $\gamma$-Hexachlorcyclohexan,
2,2-bis-(p-Äthylphenyl)-1,1-dichloräthan, p-Chlorbenzyl-p-chlorphenyl-sulfid,
2,2-bis-(p-Chlorphenyl)-1,1,1-trichloräthanol, Mangan- und Zink-äthylen-bisdithiocarbamat,
N-Trichlormethyl-thioteterahydrophthalimid, 1-(Butylcarbamoyl)-2-benzimidazolcarbamat,
2,4,5,6-Tetrachlor-1,3-benzoldicarbonitril und
3a,4,7,7a-Tetrahydro-N-(1,1,2,2-tetrachloräthansulfenyl)phthalimid.

Die erfindungsgemäßen fungiziden Mittel enthalten im allgemeinen zwischen 0,01 und 90 Gewichtsprozent der Kombination der Verbindungen der Formeln I und II, und — zweckmäßigerweise — Formulierungshilfsstoffe. Sie können z. B. in einer Form vorliegen, die sich für die Lagerung und den Transport eignet. In solchen Formulierungen, z. B. emulgierbaren Konzentraten, ist die Wirkstoffkonzentration normalerweise im höheren Bereich, vorzugsweise zwischen 25 und 75 Gewichtsprozent, insbesondere zwischen 40 und 60 Gewichtsprozent. Diese Formulierungen können kann, z. B. mit gleichen oder verschiedenen Formulierungshilfsstoffen, bis zu Wirkstoffkonzentrationen verdünnt werden, die sich für den praktischen Gebrauch eignen, als vorzugsweise zwischen ca. 0,01 und 0,5

Gewichtsprozent. Die Wirkstoffkonzentrationen können jedoch auch kleiner oder größer sein. Für Granulate usw. liegen z. B. die Konzentrationen im allgemeinen zwischen 3 und 10 Gewichtsprozent.

Das bevorzugte Mischungsverhältnis der Kombinationspartner der Formeln I und II ist 3—9 : 1.

Die Verwendung der erfindungsgemäßen fungiziden Mittel kann nach den im Pflanzenschutz üblichen Applikationsmethoden, wie Spritzen, Sprühen, Stäuben, Angießen oder Ausstreuen, erfolgen. Das Verfahren zur Bekämpfung von Pflanzenfungi ist dadurch gekennzeichnet, daß man die zu schützenden Pflanzen mit einer wirksamen Menge der erfindungsgemäßen Wirkstoffkombinationen behandelt. Pulverförmige Präparate können z. B. als Stäubemittel mit Hilfe der üblichen Verstäubergeräte auf die zu schützenden Pflanzen aufgebracht werden. Wäßrige Suspensionen sind z. B. als Spritzmittel anwendbar.

In ihren verschiedenen Anwendungsgebieten können diese Mittel in unterschiedlichen Aufwandmengen eingesetzt werden. Für die Behandlung von Pflanzen zur Bekämpfung von Fungi werden zweckmäßigerweise 250—600 g, insbesondere 300—400 g der erfindungsgemäßen Wirkstoffkombination pro ha und Behandlung verwendet.

Die nachstehenden Beispiele dienen zur näheren Erläuterung der Erfindung.

## Beispiel 1

Spritzpulver

| | Gewichtsprozent |
|---|---|
| Wirkstoff der Formel I, z. B. 4-[3-(p-tert.Butyl-phenyl)-2-methyl-propyl]-2,6-dimethylmorpholin oder 1-[3-(p-tert.Butyl-phenyl)-2-methyl-propyl]-piperidin | 36,0 |
| Wirkstoff der Formel II, z. B. 1-tert.Butyl-2-(1,2,4-triazol-1-yl)-2-(o,p-dichlorbenzyl)-äthanol | 4,0 |
| Hydratisierte Kieselsäure | 35,0 |
| Nichtionisches Netzmittel, z. B. p-Nonylphenol-Äthylenoxid (1 : 12)-Addukt | 4,0 |
| Dispergator, z. B. Natriumsalz von Maleinsäureanhydrid-Diisobutylen-Copolymer | 4,0 |
| tert.Butylhydroxytoluol (BHT) | 1,0 |
| Kreide | 16,0 |

## Beispiel 2

Emulsionskonzentrat

| | | g/l |
|---|---|---|
| Wirkstoff der Formel I, z. B. wie in Beispiel 1 | | 250,0 |
| Wirkstoff der Formel II, z. B. wie in Beispiel 1 | | 50,0 |
| Nichtionogener Emulgator, z. B. Oleylalkohol-Äthylenoxid-Addukt (1 : 10) | | 50,0 |
| Anionischer Emulgator, z. B. Calcium-Dodecylbenzolsulfonat | | 25,0 |
| Cyclohexanon | ad | 1000 ml |

## Beispiel 3

Suspensionskonzentrat

| | | g/l |
|---|---|---|
| Wirkstoff der Formel I, z. B. 4-[3-(p-tert.Butyl-phenyl)-2-methyl-propyl]-2,6-dimethylmorpholin oder 1-[3-(p-tert.Butyl-phenyl)-2-methyl-propyl]-piperidin | | 320,0 |
| Wirkstoff der Formel II, z. B. 1-tert.Butyl-2-(1,2,4-triazol-1-yl)-2-(o,p-dichlorbenzyl)-äthanol | | 50,0 |
| Nichtionogener Emulgator, z. B. Oleylalkohol-Äthylenoxid-Addukt (1 : 10) | | 50,0 |
| Dispergator, z. B. Polykondensationsprodukt aus Phenol und Formaldehyd | | 50,0 |
| Antiabsetzmittel, z. B. Natrium-Alginat | | 1,0 |
| Wasser, entionisiert | ad | 1000 ml |

Beispiel 4

Zur Bekämpfung der Pflanzenfungi

Erysiphe graminis (auf Sommerweizen)
Puccinia coronata (auf Hafer)
Puccinia dispersa (auf Roggen)
Puccinia triticina (auf Winterweizen)

unter Praxisbedingungen wurden die Wirkstoffkombinationen wie folgt angewandt:

Nach Infektion des Getreides mit den Fungi durch Auspflanzung erkrankter Getreidejungpflanzen in die gesunden Bestände erfolgte die Applikation des fungiziden Mittels, und zwar sobald ca. 15—20% der Getreideblätter Rostkrankheits- bzw. ca. 15—20% der Getreideblätter Mehltaubefallssymptome zeigten. Eine Spritzbrühe, die im Tankmixverfahren durch Zugabe der einzelnen Wirksubstanzen der Formeln I und II, Mischung mit den Formulierungshilfsstoffen und gegebenenfalls Verdünnung der primär erhaltenen Spritzbrühkonzentrate bereitgestellt wurde, wurde auf die erkrankten Pflanzen aufgebracht. Die Aufwandmenge betrug 1000 l/ha. Bei stärkerem und anhaltendem Befallsdruck erfolgte jeweils eine weitere Behandlung, und zwar 2—3 Wochen nach der ersten Behandlung.

3—5 Wochen nach der (letzten) Behandlung wurde die prozentuale Befallsreduktion gegenüber den unbehandelten Kontrollparzellen im Bestand ermittelt. Die Ergebnisse sind in der nachstehenden Tabelle zusammengefaßt.

Tabelle

| Wirkstoff, g/ha | | %ige Reduktion Fungi/Pflanzen | | | |
|---|---|---|---|---|---|
| cis-4-[3-(p-tert.Butyl-phenyl)-2-methyl-propyl)-2,6-dimethyl-morpholin | 1-tert.Butyl-2-(1,2,4-triazol-1-yl)-2-(o,p-dichlor-benzyl)-äthanol | Erysiphe graminis/ Sommer-weizen | Puccinia coronata/ Hafer | Puccinia dispersa/ Roggen | Puccinia triticina/ Winter-weizen |
| 0 | 125 | 94 | 94 | 94 | 94 |
| 750 | 0 | 96 | 98 | 96 | 96 |
| 260 | 40 | 95 | 99 | 96 | 99 |
| 250 | 50 | 96 | 100 | 99 | 99 |
| 350 | 50 | 97 | 99 | 99 | 99 |

**Patentansprüche**

1. Fungizides Mittel, dadurch gekennzeichnet, daß es mindestens eine Verbindung der Formel

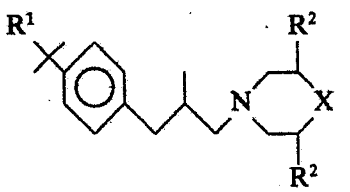

(I)

worin $R^1$ $C_1—C_4$-Alkyl oder Phenyl, und entweder X Sauerstoff und $R^2$ Methyl, oder X Methylen und $R^2$ Wasserstoff oder Methyl bedeuten,
und mindestens eine Verbindung der Formel

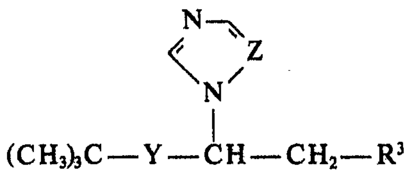

(II)

worin Y eine Gruppe der Formel (a) oder (b)

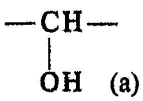 (a) 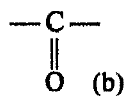 (b)

Z CH oder N, und $R^3$ p-Chlorphenyl oder o,p-Dichlorphenyl bedeuten,
wobei die Verbindung(en) der Formel I und die Verbindung(en) der Formel II im Gewichtsverhältnis von 1—10 : 1 vorliegen, und, falls erforderlich, Formulierungshilfsstoffe enthält.

2. Fungizides Mittel nach Anspruch 1, dadurch gekennzeichnet, daß es als Wirkstoff der Formel II eine solche Verbindung enthält, worin Z CH bedeutet.

3. Fungizides Mittel nach Anspruch 1, dadurch gekennzeichnet, daß es als Wirkstoff der Formel II eine solche Verbindung enthält, worin Z N bedeutet.

4. Fungizides Mittel nach einem der Ansprüche 1—3, dadurch gekennzeichnet, daß es als Wirkstoff der Formel I eine solche Verbindung enthält, worin X Sauerstoff und $R^2$ Methyl bedeutet.

5. Fungizides Mittel nach einem der Ansprüche 1—4, dadurch gekennzeichnet, daß es als Wirkstoff der Formel I eine solche Verbindung enthält, worin $R^1$ Methyl, Äthyl oder Phenyl bedeutet.

6. Fungizides Mittel nach Anspruch 5, dadurch gekennzeichnet, daß es als Wirkstoff der Formel I 4-[3-(p-tert.Butyl-phenyl)-2-methyl-propyl]-2,6-dimethylmorpholin enthält.

7. Fungizides Mittel nach Anspruch 6, dadurch gekennzeichnet, daß es als Wirkstoff der Formel I cis-4-[3-(p-tert.Butylphenyl)-2-methyl-propyl]-2,6-dimethylmorpholin enthält.

8. Fungizides Mittel nach einem der Ansprüche 1 und 3—7, dadurch gekennzeichnet, daß es als Wirkstoff der Formel II 1-tert.Butyl-2-(1,2,4-triazol-1-yl)-2-(o,p-dichlorbenzyl)-äthanol enthält.

9. Fungizides Mittel nach einem der Ansprüche 1—8, dadurch gekennzeichnet, daß das Gewichtsverhältnis Verbindung(en) der Formel I : Verbindung(en) der Formel II 3—9 : 1 beträgt.

10. Verfahren zur Herstellung eines fungiziden Mittels nach einem der Ansprüche 1—9, dadurch gekennzeichnet, daß man mindestens eine Verbindung der Formel I mit mindestens einer Verbindung der Formel II und, falls erforderlich, mit Formulierungshilfsstoffen vermischt.

11. Verwendung eines der in den Ansprüchen 1—9 genannten Mittel zur Bekämpfung von Pflanzenfungi.

**Claims**

1. A fungicidal composition, characterized in that it contains at least one compound of the formula

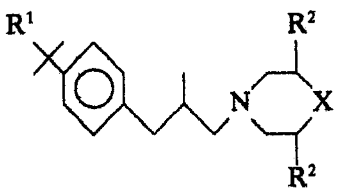

(I)

wherein $R^1$ signifies $C_1$—$C_4$-alkyl or phenyl and either X signifies oxygen and $R^2$ signifies methyl, or X signifies methylene and $R^2$ signifies hydrogen and mehyl,
and at least one compound of the formula

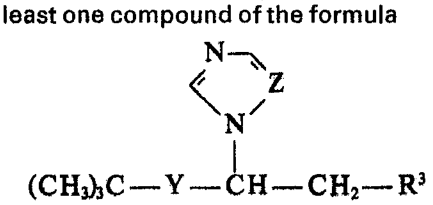

(II)

wherein Y signifies a group of the formula (a) or (b)

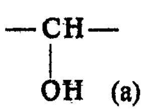 (a) 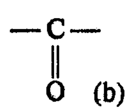 (b)

Z signifies CH or N, and $R^3$ signifies p-chlorophenyl or o,p-dichlorphenyl, the compound(s) of formula I and the compound(s) of formula II being present in the weight ratio of 2—10 : 1, and, where required, formulation adjuvants.

2. A fungicidal composition according to claim 1, characterized in that it contains as the active substance of formula II such a compound in which Z signifies CH.

3. A fungicidal composition according to claim 1, characterized in that it contains as the active substance of formula II such a compound in which Z signifies N.

4. A fungicidal composition according to any one of claims 1—3, characterized in that it contains as the active substance of formula I such a compound in which X signifies oxygen and $R^2$ signifies methyl.

5. A fungicidal composition according to any one of claims 1—4, characterized in that it contains as the active substance of formula I such a compound in which $R^1$ signifies methyl, ethyl of phenyl.

6. A fungicidal composition according to claim 5, characterized in that it contains 4-[3-(p-tert.butylphenyl)-2-methyl-propyl]-2,6-dimethyl-morpholine as the active substance of formula I.

7. A fungicidal composition according to claim 6, characterized in that it contains cis-4-[3-(p-tert.butylphenyl)-2-methyl-propyl]-2,6-dimethyl-morpholine as the active substance of formula I.

8. A fungicidal composition according to any one of claims 1 and 3—7, characterized in that it contains 1-tert.butyl-2-(1,2,4-triazol-1-yl)-2-(o,p-dichlorobenzyl)-ethanol as the active substance of formula II.

9. A fungicidal composition according to any one of claims 1—8, characterized in that the weight ratio compound(s) of formula 1: compound(s) of formula II is 3—9 : 1.

10. A process for the manufacture of a fungicidal composition according to any one of claims 1—9, characterized by mixing at least one compound of formula I with at least one compound of formula II and, where required, with formulation adjuvants.

11. The use of one of the compositions set forth in claims 1—9 for the control of plant fungi.

**Revendications**

1. Produit fongicide caractérisé en ce qu'il contient au moins un composé de formula

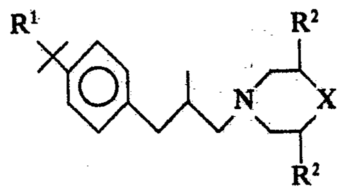

(I)

dans laquelle $R^1$ représente un groupe alkyle en $C_1-C_4$ ou phényle et ou bien X représente l'oxygène et $R^2$ un groupe méthyle, ou bien X représente un groupe méthylène et $R^2$ représente l'hydrogène ou un groupe méthyle, et au moins un composé de formule

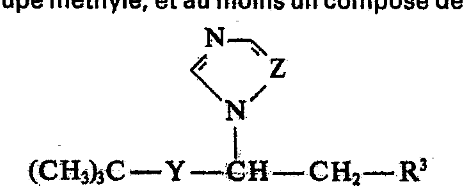

(II)

dans laquelle Y représente un groupe de formule (a) ou (b)

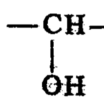 (a) 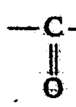 (b)

Z représente CH ou N, et $R^3$ représente un groupe p-chlorophényle ou o,p-dichlorophényle, les proportions relatives en poids entre le ou les composés de formule I et le ou les composés de formule II étant de 2 à 10 : 1, et, lorsque c'est nécessaire, des produits auxiliaires de formulation.

2. Produit fongicide selon la revendication 1, caractérisé en ce qu'il contient en tant que substance active de formule II un composé dans lequel Z représente CH.

3. Produit fongicide selon la revendication 1, caractérisé en ce qu'il contient en tant que substance active de formule II un composé dans lequel Z reprénte N.

4. Produit fongicide selon l'une des revendications 1 à 3 caractérisé en ce qu'il contient en tant que substance active de formule I un composé dans lequel X représente l'oxygène et $R^2$ un groupe méthyle.

5. Produit fongicide selon l'une des revendications 1 à 4, caractérisé en ce qu'il contient en tant que subtance active de formule I un composé dans lequel $R^1$ représente un groupe méthyle, éthyle ou

phényle.

6. Produit fongicide selon la revendication 5, caractérisé en ce qu'il contient en tant que substance active de formule I la 4-[3-(p-tert.-butyl-phényl)-2-méthylpropyl]-2,6-diméthyl-morpholine.

7. Produit fongicide selon la revendication 6, caractérisé en ce qu'il contient en tant que substance active de formule I la cis-4-[3-(p-tert.-butyl-phényl)-2-méthyl-propyl]-2,6-diméthyl-morpholine.

8. Produit fongicide selon l'une des revendications 1 et 3 à 7, caractérisé en ce qu'il contient en tant que substance active de formule II le 1-tert.-butyl-2-(1,2,4-triazole-1-yl)-2-(o,p-dichlorobenzyl)-éthanol.

9. Produit fongicide selon l'une des revendications 1 à 8, caractérisé en ce que les proportions relatives en poids entre le ou les composés de formule I et le ou les composés de formule II sont de 3 à 9 : 1.

10. Procédé pour préparer un produit fongicide selon l'une des revendications 1 à 9, caractérisé en ce que l'on mélange au moins un composé de formule I avec au moins un composé de formule II et, lorsque c'est nécessaire, des produits auxiliaires de formulation.

11. Utilisation de l'un des produits mentionnés dans les revendications 1 à 9 pour la lutte contre les mycètes des végétaux.